# FASCICULE DE BREVET EUROPEEN

(11) **EP 2 573 297 B1**
(45) Date de publication et mention de la délivrance du brevet: **30.11.2016**
(21) Numéro de dépôt: 12306002.2
(22) Date de dépôt: 14.08.2012
(51) Int. Cl.: E04F 21/18, B62B 1/26, B62B 3/10, B62B 1/00

(54) **Structure roulante de manutention et de pose de panneaux ou plaques sur des murs ou plafonds**
Fahrbare Vorrichtung zum Transportieren und Montieren von Paneelen bzw. Platten an Wänden oder Decken
Movable structure for handling and installing panels or plates onto walls or ceilings

(30) Priorité: 23.09.2011 FR 1158486; 30.05.2012 FR 1254945
(43) Date de publication de la demande: 27.03.2013
(73) Titulaire: M.B.H. Developpement, 42640 Saint Romain la Motte (FR)
(72) Inventeur: Bottazzi, Marc, 42120 SAINT VINCENT DE BOISSET (FR)
(74) Mandataire: Cabinet Laurent & Charras

(56) Documents cités:
- EP-A1- 0 969 165
- EP-A1- 1 302 607
- EP-A1- 2 314 422
- EP-A2- 1 640 531
- DE-A1-102006 052 387

## Description

L'invention se rattache au secteur technique des appareils de levage et de manutention du type lève plaques pour permettre la pose de plaques ou panneaux de grandes dimensions sur des parois de murs et/ou plafonds de bâtiments, constructions et similaires.

On connaît sur le marché de nombreux fabricants de ce type d'appareils, qui, pour l'essentiel, sont constitués d'une structure roulante, avec une plateforme de stabilisation incluant 3 ou 4 pieds avec moyens de roulement, un mât avec un ensemble de colonnes télescopiques emboîtées les unes dans les autres, et se développant sous l'action d'un moyen actionnant un treuil avec câbles permettant le développement des dites colonnes. La colonne supérieure, c'est-à-dire, celle destinée à être au plus haut de l'appareil sous plafond, est agencée pour la réception d'un cadre établi à partir d'éléments profilés pour la réception, tenue et présentation des plaques et panneaux à poser. Ce cadre est agencé pour être pivotant afin de permettre la présentation des plaques ou panneaux à la verticale ou à l'horizontale, mur ou plafond.

Le document EP 2 314 422 A1 décrit une structure roulante de ce type selon le préambule de la revendication 1. Les appareils connus sont fiables et pour certains très perfectionnés.

Cependant, certains inconvénients apparaissent, en particulier au plan de leur encombrement, aussi bien en utilisation ou rangement, que lors de leur manipulation. De plus, ils ne sont pas toujours faciles à régler en position transversale lors de la pose des plaques ou panneaux dans un plan vertical et les ajustements en position restent délicats.

La démarche du Demandeur a justement été de repenser à la conception générale de ce type d'appareils en recherchant une mise en oeuvre simplifiée, pratique à manipuler pour l'opérateur en lui permettant des réglages et ajustements de position transversale, en particulier lors de la pose de panneaux ou plaques dans un plan vertical.

Selon une première caractéristique, la structure roulante de manutention et de pose de panneaux ou plaques du type comprenant un mât avec un ensemble de colonnes télescopiques se développant sous l'action d'un treuil avec câbles, la colonne supérieure destinée à être au plus de l'appareil sous plafond étant agencée pour la réception d'un cadre établi à partir d'éléments profilés pour la réception tenue et présentation de plaques et panneaux à poser, le cadre étant monté pivotant par rapport à une structure support associée au dit cadre pour permettre la présentation des plaques ou panneaux à la verticale ou à l'horizontale et coopérant avec la dite colonne supérieure, est remarquable en ce que la dite structure roulante est agencée avec deux sous-ensembles liés et articulés l'un par rapport à l'autre, et en ce que la dite structure roulante a une capacité de transformation pour être manutentionnée par un opérateur sur trois roues dans un même plan pour des opérations de roulement au sol, sur deux roues principales pour assurer son transport à la manière d'un diable, poussette, bagage à roulettes, ou à partir de deux roues secondaires pour assurer lors de la pose à la verticale de panneaux ou plaques un ajustement en position transversale, et en ce que le premier sous-ensemble est agencé pour recevoir des roues principales et des roues secondaires et le second sous ensemble pour recevoir le mât récepteur de l'ensemble colonnes télescopiques et cadre support des plaques ou panneaux à poser, et en ce que les deux premier et second sous-ensembles sont solidarisés par un module d'assemblage à partir duquel est disposé un bras incluant une roulette, et en ce que les deux sous ensembles permettent d'assurer selon leur position angulaire relative les différentes fonctions de pose de panneaux et plaques à la verticale et à l'horizontale, et en ce que le mât est mobile verticalement par rapport aux dites roues principales, en arrière de celles en situation de roulement au sol, et en avant des dites roues principales lors de la pose des panneaux ou plaques verticalement par action de relevage sur le premier sous-ensemble.

Ces caractéristiques et d'autres encore ressortiront bien de la suite de la description.

Pour fixer l'objet de l'invention illustré d'une manière non limitative aux figures des dessins où :
La figure 1 est une vue en perspective de la structure roulante de manutention et de pose de plaques ou panneaux selon l'invention en situation position de transport,
La figure 2 est une vue de côté de la structure roulante selon la figure 1,
La figure 3 est une vue de côté de la structure roulante selon l'invention en situation de position de changement de plaques ou panneaux au plafond,
La figure 4 est une vue à grande échelle d'un détail (B) identifié figure 3,
La figure 5 est une vue à grande échelle d'un détail (C) identifié figure 3,
La figure 6 est une vue de côté de la structure roulante selon l'invention en situation de présentation de panneau ou plaque contre un mur avant mise en place finale,
La figure 7 est une vue à grande échelle d'un détail A selon la figure 6,
La figure 8 est une vue à grande échelle d'un détail D identifié figure 6,

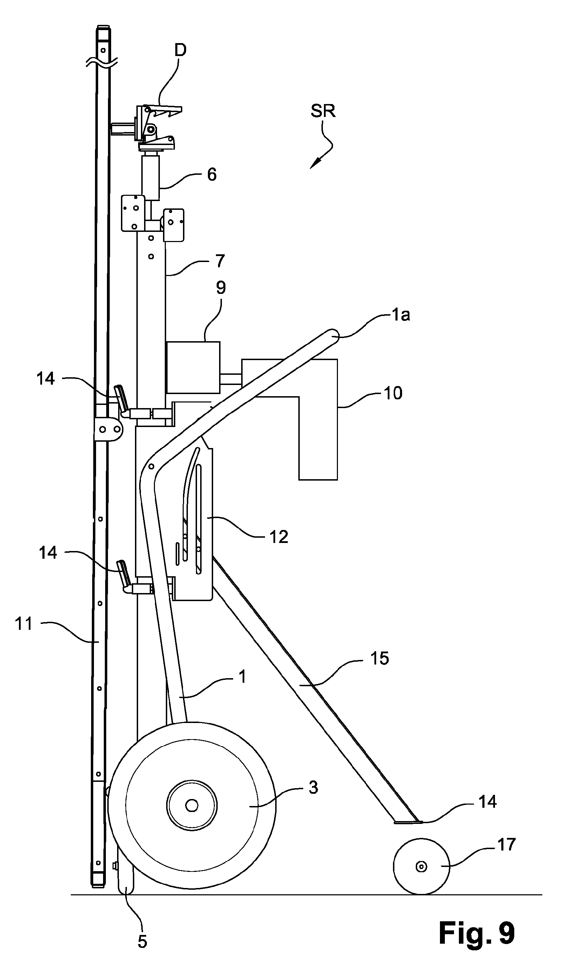

La figure 9 est une vue de côté de la structure roulante selon l'invention en situation de pose d'un panneau ou plaque à la verticale contre un mur,
La figure 10 est une vue en perspective d'une variante d'exécution de la structure roulante de manutention et de pose de plaques ou panneaux selon l'invention en situation position de transport,
La figure 11 est une vue de côté de la variante d'exécution de la structure roulante selon la figure 10,
La figure 12 est une vue de côté de la variante d'exécution de la structure roulante selon l'invention en situation de position de changement de plaques ou panneaux au plafond,

Afin de rendre plus concret l'objet de l'invention, on le décrit maintenant d'une manière non limitative illustré aux figures des dessins.

La structure roulante de manutention et de pose de panneaux ou plaques est référencée dans son ensemble par (SR). Cette structure roulante est conçue et agencée pour permettre la présentation de plaques ou panneaux dans un plan vertical contre les murs ou dans un plan horizontal pour les plafonds en ayant une capacité de transformation pour être manutentionnée par l'opérateur sur trois roues dans un même plan pour les opérations classiques de roulement au sol, mais aussi sur deux roues principales pour assurer son transport à la manière d'un diable, d'une poussette, ou bagage à roulette, ou avoir à partir de deux roues secondaires la possibilité pour assurer, lors de la pose à la verticale de panneaux ou plaques, des ajustements de position transversale.

En d'autres termes, la structure roulante pour la manutention et la pose de panneaux ou plaques aux murs et/ou plafonds est conçue pour être d'une très grande maniabilité pour l'opérateur en toutes circonstances d'utilisation, et aussi pour permettre des ajustements transversaux précis, rapides, et aisés pour assurer le positionnement des plaques ou panneaux à la verticale, et ce, outre sa fonction initiale première pour la pose des plaques ou panneaux en position horizontale.

Ainsi, selon l'invention, la structure roulante (SR) est constituée par deux sous-ensembles (S1-S2) qui sont étroitement liés et articulés l'un par rapport à l'autre, et qui, selon leur position angulaire relative permettent d'assurer les différentes fonctions de pose des panneaux et plaques en vertical aux murs, en horizontal aux plafonds, et en situation de transport.

Plus particulièrement, le premier sous ensemble (S1) est constitué par un cadre (1) réalisé avec deux longerons tubulaires espacés et parallèles, dont l'extrémité supérieure (1a) est profilée et raccordée pour constituer une poignée de préhension par l'opérateur. L'extrémité inférieure (1b) des dits longerons est rendue solidaire par tous moyens appropriés d'un essieu (2) dont les extrémités portent les roues principales (3) de la structure roulante (SR). Ces roues (3) de grand diamètre constituent les moyens de roulement principaux de la structure roulante, et en particulier, dans les phases de transport et de manutention. En outre, le dit premier sous ensemble comprend dans sa partie avant un profilé (4) rapporté et soudé à l'essieu (2) pour constituer une plateforme d'appui de la plaque ou panneau.

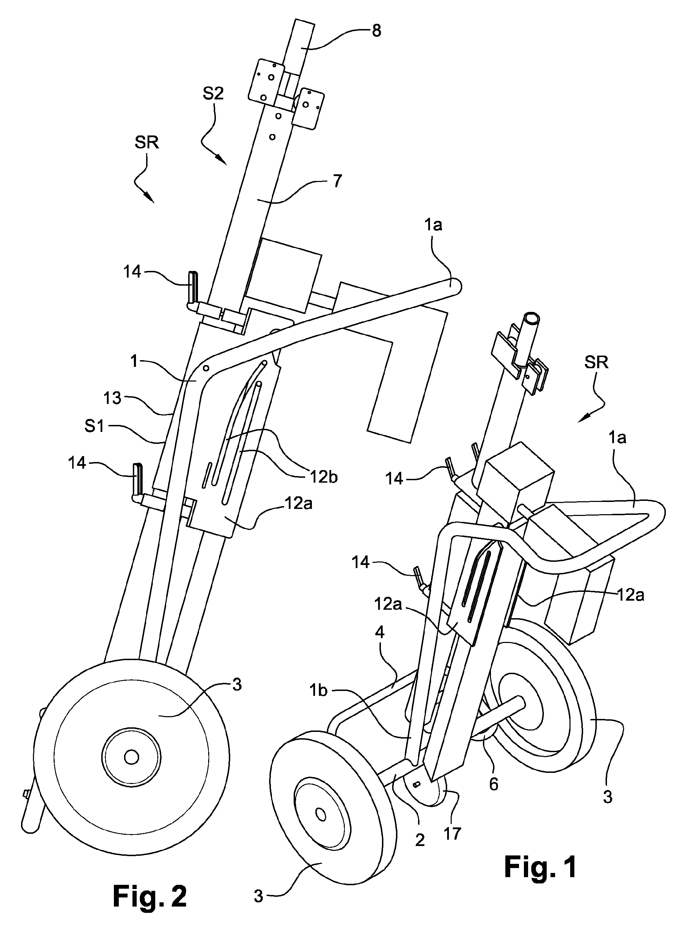

Selon une autre caractéristique essentielle de l'invention, le dit premier sous ensemble (S1) inclut à l'avant un couple de roues secondaires (5) qui sont disposées transversalement par rapport au sens de déplacement de la structure roulante. Ces roues secondaires (5), de plus petit diamètre que celui des roues principales, sont montées à l'avant de la structure roulante, à partir de longerons profilés (6) fixés à l'essieu (2) comme représenté figure 1. Ce couple de roues secondaires se situe dans un plan sensiblement au-dessus du plan d'appui au sol et de roulement des roues principales.

Le second sous ensemble (S2) comprend un mât (7) de grande hauteur, creux intérieurement pour recevoir un ensemble de colonnes télescopiques (8) qui sont susceptibles d'être déployées les unes par rapport aux autres à l'aide d'un mécanisme connu pour ce type d'appareil de levage et de manutention de plaques ou panneaux, à savoir, un treuil (9) avec système à chaînes, à un ou plusieurs brins (non représenté) et accouplés de manière connue aux dites colonnes. Le treuil (9) est lui-même actionné par un moyen moteur (10) qui peut être un outil électro portatif alimenté sur 220 volts ou sur batterie, comme représenté à titre schématique figure 2. De manière connue, la colonne supérieure est agencée pour recevoir un dispositif (D), support et d'articulation d'un cadre récepteur (11). Ce cadre récepteur (11) de plaque ou panneau est conçu de toute manière connue selon l'état de l'art, ainsi que son mécanisme d'articulation avec verrouillage en position, soit pour être horizontal, soit pour être vertical.

Les deux sous ensemble (S1-S2) sont reliés l'un par rapport à l'autre par un module constituant un étrier (12). Cet étrier est agencé pour permettre l'articulation en pivot du sous ensemble (S1) par rapport au second sous ensemble (S2) grâce à un axe pivot (13) traversant l'étrier. Cet axe pivot (13) est prévu et disposé dans la partie coudée du cadre (1) entre les longerons tubulaires et leur extrémité supérieure formant poignée de préhension. En outre, le dit étrier est fixé en position par le biais de moyens (14) d'ancrage et de verrouillage permettant un assemblage fixe par rapport au mât (7). Ces moyens (14) assurent ainsi un positionnement en hauteur fixe du sous ensemble (S1) par rapport au sous ensemble (S2).

Selon une autre disposition, l'étrier (12) présente des flasques (12a) parallèles et espacés qui sont agencés avec des lumières (12b) oblongues. Le mât (7) est agencé extérieurement entre les dits flasques avec une forme en chape qui permet le positionnement d'un bras (15) par le biais d'un axe d'articulation, le dit bras présentant en extrémité une roulette (17). Le bras (15) présente des ergots (15a) susceptibles de coulisser dans les lumières formées sur les flasques précités.

Ainsi, en se référant aux différentes figures des dessins, les figures 1 et 2 montrent la structure roulante (SR) en situation de transport par l'opérateur, le cadre récepteur du panneau ou plaque ayant été enlevé. Le bras (15) est rabattu contre le mât. La structure roulante est déplacée par l'opérateur dans une position oblique à la manière d'un diable, poussette ou bagage à roulettes, et ce, sur les deux roues principales qui sont seules en contact avec le sol.

En situation de pose de panneaux ou plaques au plafond, la structure roulante est en appui au sol sur trois roues, les deux roues principales et la roulette (17) associée au bras (15). Un moyen de verrouillage de la ou des roue(s) en position peut être actionné de manière connue. Le cadre support de panneaux ou plaques peut être déployé à la hauteur désirée par action sur le treuil par la commande motorisée.

En situation de pose de panneaux ou plaques au mur, on distingue par contre deux situations pour la mise en oeuvre de l'invention.

La première situation correspond à celle de l'approche de la structure roulante en appui sur trois roues, celles principales et la roulette (17) près du mur.

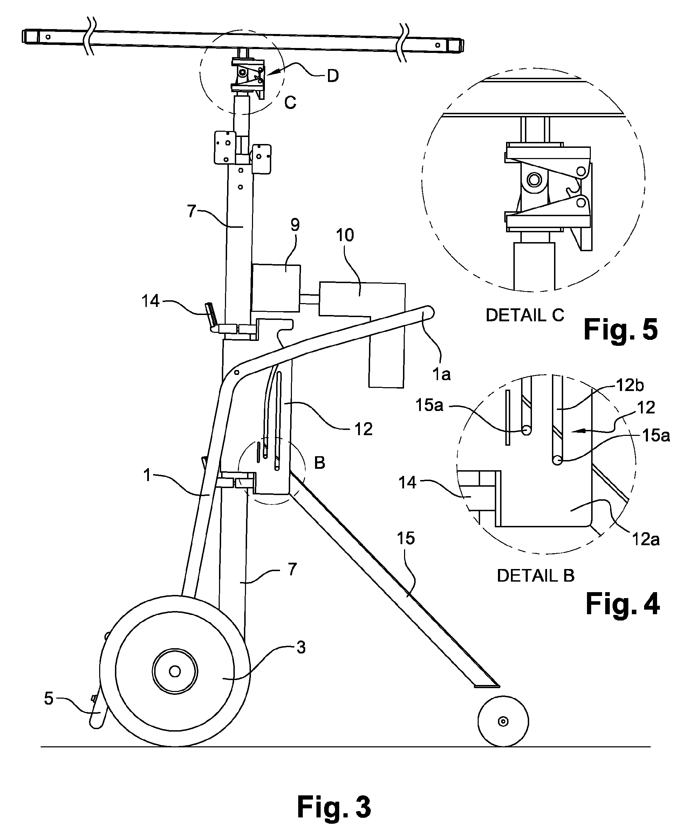

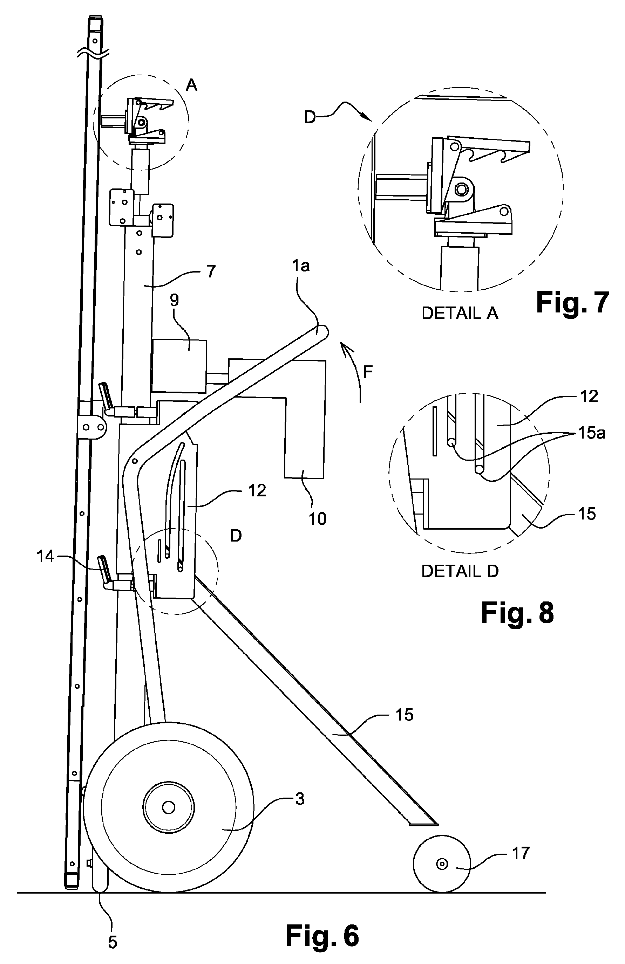

La seconde situation, pour l'opérateur, consiste à pousser la structure roulante de manière à ce que le panneau ou plaque vienne en butée contre la partie basse du mur ou paroi. Ensuite l'opérateur fait basculer le sous équipement (S1) vers le haut en relevant la partie poignée selon la flèche (F). Le mât change de position verticale par rapport aux roues principales. Le mât est mobile verticalement par rapport aux dites roues principales, en arrière de celles-ci (figure 3) en situation de roulement au sol, et en avant des dites roues principales lors de la pose des panneaux ou plaques verticalement par l'action de relevage sur la partie poignée du sous ensemble (S1). Figure 6 on a illustré le passage de la position selon la position pré-relevage qui a été effectuée sur le sous-ensemble (S1) avec le contact provisoire et temporaire des roues principales et secondaires simultanément au sol. Puis on procède à un léger relevage complémentaire (F1) de la partie poignée du sous-ensemble (S1) permettant de mettre la structure roulante en appui seulement sur les roues secondaires. Cela entraîne le contact des roues secondaires avec le sol au détriment des roues principales qui décollent de quelques millimètres ou centimètres par rapport au sol. Il s'ensuit que le mât et le panneau ou plaque sont à la verticale, le panneau ou plaque contre le mur. L'opérateur peut ensuite ajuster comme il convient le positionnement de la plaque par un déplacement transversal de la structure roulante grâce aux roues secondaires. Il y a lieu ensuite de finaliser la pose du panneau ou plaque.

La nouvelle conception de la structure roulante est donc particulièrement simple et pratique. On obtient ainsi quatre positions possibles, à savoir :
- Position pliée pour le transport (figure 1),
- Position changement de la plaque ou panneau et manutention (figure3),
- Présentation et pose de la plaque contre le mur,
- Position d'utilisation des roues secondaires pour l'ajustement transversal de la structure roulante.

Les avantages ressortent bien de la description. On souligne la facilité de manipulation de la structure roulante, la pose bien ajustée dans le plan vertical des panneaux ou plaques sans difficultés grâce à l'adaptation des moyens de roulement secondaires, le faible encombrement de la structure roulante comme représenté figure 1.

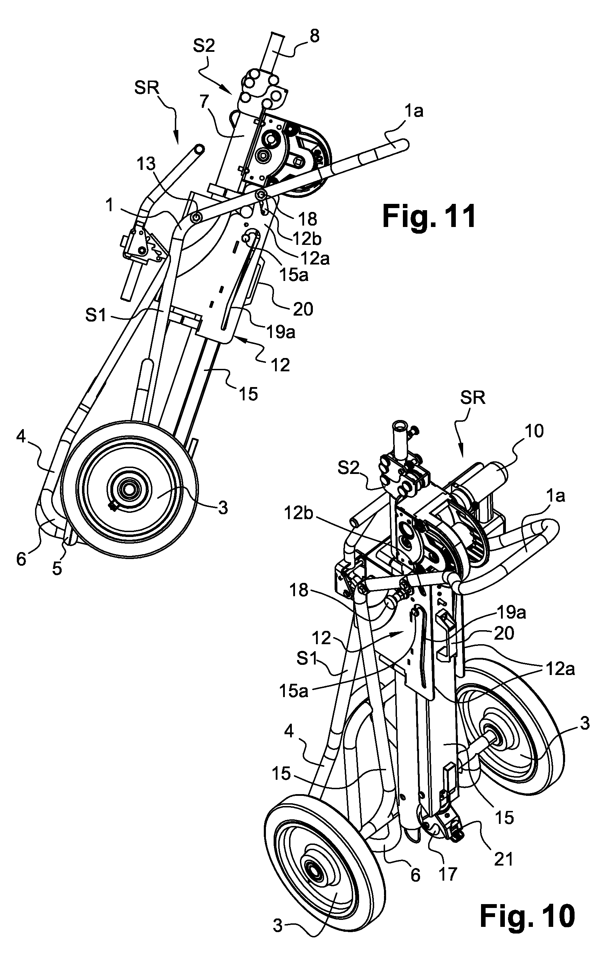

Selon une variante d'exécution de la structure roulante suivant l'invention représentée sur les figures 10 à 12, ladite structure roulante de manutention et de pose de panneaux ou plaques est constituée de la même manière que précédemment par deux sous-ensembles (S1-S2) qui sont étroitement liés et articulés l'un par rapport à l'autre, et qui, selon leur position angulaire relative permette d'assurer les différentes fonctions de pose des panneaux et plaques en vertical aux murs, en horizontal aux plafonds, et en situation de transport.

Le premier sous ensemble (S1) est constitué par un cadre (1) réalisé avec deux longerons tubulaires espacés et parallèles, dont l'extrémité supérieure (1a) est profilée et raccordée pour constituer une poignée de préhension par l'opérateur. L'extrémité inférieure (1b) des dits longerons est rendue solidaire par tous moyens appropriés d'un essieu (2) dont les extrémités portent les roues principales (3) de la structure roulante (SR). Ces roues (3) de grand diamètre constituent les moyens de roulement principaux de la structure roulante, et en particulier, dans les phases de transport et de manutention. En outre, ledit premier sous ensemble (S1) comprend dans sa partie avant un profilé (4), présentant une forme générale de pare-buffle, rapporté et soudé à l'essieu (2) pour constituer une plateforme d'appui de la plaque ou panneau.

Par ailleurs, ledit premier sous ensemble (S1) inclut à l'avant un couple de roues secondaires (5) qui sont disposées transversalement par rapport au sens de déplacement de la structure roulante. Ces roues secondaires (5), de plus petit diamètre que celui des roues principales, sont montées à l'avant de la structure roulante, à partir de longerons profilés (6) fixés à l'essieu (2) comme représenté figure 1. Ce couple de roues secondaires (5) se situe dans un plan sensiblement au-dessus du plan d'appui au sol et de roulement des roues principales (3).

De la même manière que précédemment, le second sous ensemble (S2) comprend un mât (7) de grande hauteur, creux intérieurement pour recevoir un ensemble de colonnes télescopiques (8) qui sont susceptibles d'être déployées les unes par rapport aux autres à l'aide d'un treuil (9) avec système à chaînes, à un ou plusieurs brins (non représenté) et accouplés de manière connue aux dites colonnes. Le treuil (9) est lui-même actionné par un moyen moteur (10) qui peut être un outil électro portatif alimenté sur 220 volts ou sur batterie, comme représenté à titre schématique figure 10. De manière connue, la colonne supérieure est agencée pour recevoir un dispositif (D), support et d'articulation d'un cadre récepteur (11). Ce cadre récepteur (11) de plaque ou panneau est conçu de toute manière connue selon l'état de l'art, ainsi que son mécanisme d'articulation avec verrouillage en position, soit pour être horizontal, soit pour être vertical.

Alternativement, et de manière avantageuse, la colonne supérieure du mât (7) pourra recevoir un cadre dérouleur d'isolant ou une petite benne apte à recevoir des gravats ou similaire, bien connus de l'homme du métier sans pour autant sortir du cadre de l'invention.

Les deux sous ensemble (S1-S2) sont reliés l'un par rapport à l'autre par un module constituant un étrier (12). Cet étrier est agencé pour permettre l'articulation en pivot du sous ensemble (S1) par rapport au second sous ensemble (S2) grâce à un axe pivot (13) traversant l'étrier (12). Cet axe pivot (13) est prévu et disposé dans la partie coudée du cadre (1) entre les longerons tubulaires et leur extrémité supérieure formant poignée de préhension (1a).

Ledit étrier (12) présente des flasques (12a) parallèles et espacés qui sont agencés dans sa partie supérieure avec des lumières (12b) oblongues recevant des axes (18) solidaires de la partie médiane de la partie coudée du cadre (1) entre les longerons tubulaires et leur extrémité supérieure formant poignée de préhension (1a). Le mât (7) est agencé extérieurement entre les dits flasques (12a).

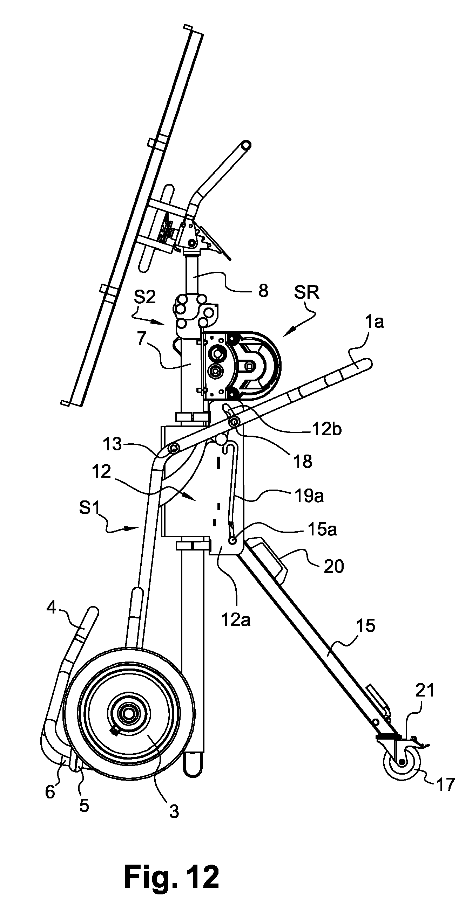

Par ailleurs, la structure roulante comporte un bras (15) muni à son extrémité proximale d'ergots (15a) coulissant dans des lumières (19a) comportant une partie verticale s'étendant sensiblement depuis le bord inférieur des flasques (12a) jusqu'au bord supérieur desdites flasques (12a) et une partie recourbée vers l'avant des flasques (12a), et à son extrémité distale d'une roulette (17). De cette manière, le bras (15) est apte à être déplacée depuis une position repliée (figures 10 et 11) jusqu'à une position dépliée (figure 12) active dans laquelle la roulette (17) prend appui sur le sol afin d'assurer la stabilité de la structure roulante suivant l'invention.

De manière avantageuse, ledit bras (15) comporte une poignée (20) facilitant la manipulation dudit bras lors de son repliage et/ou de son dépliage ainsi qu'un frein (21) permettant de bloquer la roulette (17).

Enfin, il est bien évident que les exemples que l'on vient de donner ne sont que des illustrations particulières en aucun cas limitatives quant aux domaines d'application de l'invention.

## Revendications

1. Structure roulante (SR) de manutention et de pose de panneaux ou plaques à la verticale et à l'horizontale, comprenant un mât (7) avec un ensemble de colonnes télescopiques (8) se développant sous l'action d'un treuil (9) avec câbles ou chaînes, la colonne supérieure destinée à être au plus haut de l'appareil sous plafond étant agencée pour la réception d'un cadre (11) établi à partir d'éléments profilés pour la réception tenue et présentation de plaques et panneaux à poser, le cadre (11) étant monté pivotant par rapport à une structure support associée au dit cadre pour permettre la présentation des plaques ou panneaux à la verticale et à l'horizontale et coopérant avec la dite colonne supérieure, **caractérisée en ce que**
- la dite structure roulante (SR) est agencée avec deux sous-ensembles (S1,S2) liés et articulés l'un par rapport à l'autre,
- les deux sous-ensembles (S1,S2) permettent d'assurer selon leur position angulaire relative les différentes fonctions de pose de panneaux et plaques à la verticale et à l'horizontale,
- le premier sous-ensemble (S1) comprend deux roues principales (3) et deux roues secondaires (5) et le second sous-ensemble (S2) comprend ledit mât (7),
- les deux sous-ensembles (S1,S2) sont solidarisés par un module d'assemblage (12) à partir duquel est disposé un bras (15) incluant une roulette (17),
- la dite structure roulante a une capacité de transformation pour être manutentionnée par un opérateur sur les deux roues principales (3) et la roulette (17) dans un même plan pour des opérations de roulement au sol, sur les deux roues principales (3) pour assurer son transport à la manière d'un diable, poussette ou bagage à roulettes, et sur les deux roues secondaires (5) pour assurer un ajustement en position transversale lors de la pose à la verticale de panneaux ou plaques,
- le mât (7) est mobile verticalement par rapport aux deux roues principales (3), en arrière de celles en situation de roulement au sol, et en avant de celles-ci lors de la pose des panneaux ou plaques à la verticale par action de relevage sur ce premier sous-ensemble.

2. Structure roulante selon la revendication 1, **caractérisée en ce que** le premier sous ensemble (S1) est constitué par un cadre (1) réalisé avec deux longerons tubulaires espacés et parallèles, dont l'extrémité supérieure (1a) est profilée et raccordée pour constituer une poignée de préhension pour l'opérateur, **et en ce que** l'extrémité inférieure (1b) des dits longerons est rendue solidaire d'un essieu (2) dont les extrémités portent les roues principales (3) de la structure roulante (SR), **et en ce que** le dit premier sous ensemble comprend dans sa partie avant un profilé (4) rapporté et soudé à l'essieu (2) pour constituer une plateforme d'appui de la plaque ou panneau, **et en ce que** le dit premier sous ensemble (S1) inclut à l'avant un couple de roues secondaires (5) qui sont disposées transversalement par rapport au sens de déplacement de la structure roulante.

3. Structure roulante selon la revendication 2, **caractérisée en que** les roues secondaires (5), de plus petit diamètre que celui des roues principales, sont montées à l'avant de la structure roulante, à partir de longerons profilés (6) fixés à l'essieu (2), **et en ce que** le couple de roues secondaires se situe dans un plan sensiblement au-dessus du plan d'appui au sol et de roulement des roues principales.

4. Structure roulante selon la revendication 1, **caractérisée en ce que** le second sous ensemble (S2) comprend un mât (7) de grande hauteur, creux intérieurement pour recevoir un ensemble de colonnes télescopiques (8) qui sont susceptibles d'être déployées les unes par rapport aux autres à l'aide d'un mécanisme avec un treuil (9) avec système à chaînes, à un ou plusieurs brins, le treuil (9) est lui-même actionné par un moyen moteur (10) qui peut être un outil électro portatif, la colonne supérieure recevant le dispositif support du cadre porte panneau ou porte plaque.

5. Structure roulante selon la revendication 1, **caractérisée en ce que** les deux sous ensembles (S1-S2) sont reliés l'un par rapport à l'autre par un module constituant un étrier (12), **et en ce que** l'étrier est agencé pour permettre l'articulation du sous ensemble (S1) par rapport au sous ensemble (S2) grâce à un axe pivot (13) traversant l'étrier, **et en ce que** l'axe pivot (13) est prévu et disposé dans la partie coudée du cadre (1) entre les longerons tubulaires et leur extrémité supérieure formant poignée de préhension, **et en ce que** le dit étrier est fixé en position par le biais de moyens (14) d'ancrage et de verrouillage permettant un assemblage fixe par rapport au mât (7), **et en ce que** les moyens (14) assurent un positionnement en hauteur fixe du sous ensemble (S1) par rapport au sous ensemble (S2).

6. Structure roulante selon la revendication 1, **caractérisée en ce que** le module sous forme d'étrier (12) présente des flasques (12a) parallèles et espacés qui sont agencés avec des lumières (12b) oblongues, **et en ce que** le mât (7) est agencé extérieurement entre les dits flasques avec une forme en chape (7a) qui permet le positionnement d'un bras (15) par le biais d'un axe d'articulation, le dit bras présentant en extrémité une roulette (17), **et en ce que** le bras (15) présente des ergots (15a) susceptibles de coulisser dans les lumières formées sur les flasques précités.

## Patentansprüche

1. Fahrstruktur (SR) zum Befördern und Absetzen von Platten oder Paneelen in der Vertikalen und in der Horizontalen, bestehend aus einem Mast (7) mit mehreren Hubsäulen (8), die mit Seilen oder Ketten über eine Winde (9) bewegt werden, wobei die obere Säule, die bezogen auf die Raumhöhe die oberste Geräteposition einnehmen soll, zur Aufnahme eines Rahmens (11) ausgestaltet ist, welcher zur Aufnahme, zum Halten und zur Bereitstellung der abzusetzenden Platten und Paneele aus Profilelementen besteht, wobei der Rahmen (11) bezogen auf eine rahmenzugehörige Trägerkonstruktion schwenkbar angeordnet ist, um eine Ausrichtung der Platten und Paneele in der Vertikalen und in der Horizontalen zu ermöglichen, und welcher mit der oberen Säule zusammenwirkt, **dadurch gekennzeichnet, dass**
- die Fahrstruktur (SR) mit zwei gelenkig miteinander verbundenen Montageeinheiten (S1,S2) ausgebildet ist,
- die beiden Montageeinheiten (S1,S2), je nach ihrer relativen Winkelposition, die verschiedenen Funktionen zum Absetzen der Platten und Paneele in der Vertikalen und in der Horizontalen sicherstellen können,
- die erste Montageeinheit (S1) zwei Haupträder (3) und zwei Sekundärräder (5) umfasst und die zweite Montageeinheit (S2) den Mast (7) umfasst,
- die beiden Montageeinheiten (S1,S2) über ein Verbindungsmodul (12), an dem ein Arm (15) mit einer Laufrolle (17) angebracht ist, fest miteinander verbunden sind,
- die Fahrstruktur eine Wandlungsfähigkeit besitzt, um von einer Bedienperson auf den beiden Haupträdern (3) und der Laufrolle (17) in einer Ebene für Rollbewegungen auf dem Boden, auf den beiden Haupträdern (3) für einen Transport wie mit einer Sackkarre, einem Kinderwagen oder einem Koffer auf Rollen und auf den beiden Sekundärrädern (5) zum Korrigieren der transversalen Position beim Absetzen der Platten oder Paneele in der Vertikalen bewegt werden zu können,
- der Mast (7) bezogen auf die beiden Haupträder (3) vertikal bewegbar ist, beim Verrollen auf dem Boden hinter ihnen und beim Absetzen der Platten oder Paneele in der Vertikalen durch Hebeeinwirkung auf diese erste Montageeinheit vor ihnen angeordnet ist.

2. Fahrstruktur nach Anspruch 1, **dadurch gekennzeichnet, dass** die erste Montageeinheit (S1) aus einem Rahmen (1) besteht, der aus zwei parallelen und distanzierten, rohrförmigen Holmen gebildet wird, deren oberes Ende (1a) profiliert und zusammenlaufend als Griffteil für die Bedienperson ausgebildet ist, und dass das untere Ende (1b) dieser Holme fest mit einer Achse (2) verbunden ist, deren Enden die Haupträder (3) der Fahrstruktur (SR) tragen, und dass die erste Montageeinheit in ihrem vorderen Bereich ein angefügtes und an die Achse (2) angeschweißtes Profil (4) aufweist, um der Platte oder dem Paneel als Auflageplattform zu dienen, und dass die erste Montageeinheit (S1) vorne ein Paar Sekundärräder (5) enthält, die quer zur Bewegungsrichtung der Fahrstruktur angeordnet sind.

3. Fahrstruktur nach Anspruch 2, **dadurch gekennzeichnet dass** die Sekundärräder (5), mit kleinerem Durchmesser als die Haupträder, ausgehend von profilierten, an der Achse (2) befestigten Holmen (6) vorne an der Fahrstruktur montiert sind, und dass das Paar Sekundärräder in einer Ebene etwas oberhalb der Auflageebene am Boden und der Rollebene der Haupträder liegt.

4. Fahrstruktur nach Anspruch 1, **dadurch gekennzeichnet, dass** die zweite Montageeinheit (S2) aus einem hohen, zur Aufnahme mehrerer Hubsäulen (8) innen hohlen Mast (7) besteht, welche mit Hilfe eines Mechanismus' bestehend aus einer Winde (9) mit einem Ein- oder Mehrstrang-Kettensystem zueinander ausgefahren werden können und die Winde (9) selbst über einen Antriebsmotor (10), etwa ein tragbares Elektrowerkzeug, angetrieben wird, wobei die obere Säule die Aufnahmevorrichtung des Plattenhalter- oder Paneelhalterrahmens umfasst.

5. Fahrstruktur nach Anspruch 1, **dadurch gekennzeichnet, dass** die beiden Montageeinheiten (S1-S2) über ein aus einem Bügel (12) bestehenden Modul miteinander verbunden sind, und dass der Bügel so angeordnet ist, dass die Montageeinheit (S1) bezogen auf die Montageeinheit (S2) mittels einer den Bügel durchquerenden Schwenkachse (13) gelenkartig bewegt werden kann, und dass die Schwenkachse (13) in dem gebogenen Teil des Rahmens (1) zwischen den rohrförmigen Holmen und deren oberem Ende, welches das Griffteil bildet, vorgesehen und angeordnet ist, und dass der Bügel über Verankerungs- und Verriegelungsmittel (14), welche eine feste Verbindung zum Mast (7) ermöglichen, lagefixiert ist, und dass die Mittel (14) eine feststehende Höhenpositionierung der Montageeinheit (S1) bezogen auf die Montageeinheit (S2) sicherstellen.

6. Fahrstruktur nach Anspruch 1, **dadurch gekennzeichnet, dass** das bügelförmige Modul (12) parallele und distanzierte Seitenwangen (12a) aufweist, in denen Langlöcher (12b) ausgebildet sind, und dass der Mast (7) außen zwischen den Seitenwangen in Form eines Gabelstücks (7a) ausgebildet ist, welches über eine Gelenkachse die Positionierung eines Arms (15) ermöglicht, wobei der Arm an seinem Ende eine Laufrolle (17) aufweist, und dass der Arm (15) Zapfen (15a) aufweist, die in den Langlöchern der Seitenwangen verschoben werden können.

## Claims

1. Wheeled structure (SR) for handling and fitting panels or plates vertically or horizontally, comprising a pole (7) with a set of telescopic columns (8) expanding under the action of a cable winch (9) with cables or chains, the upper column intended to be at the highest point of the equipment under the ceiling being arranged to accommodate a frame (11) made from shaped elements for the accommodation, holding and presentation of plates and panels for fitting, the frame (11) being pivotably mounted relative to a support structure associated with said frame so that the plates or panels can be presented vertically or horizontally and engaging with said upper column, **characterised in that**
- said wheeled structure (SR) is arranged with two connected sub-assemblies (S1) and (S2) linked and articulated one relative to the other,
- the two sub-assemblies (S1) and (S2), depending on the relative angular position thereof, allow to fulfil the various vertical and horizontal panel and plate fitting functions,
- the first sub-assembly (S1) comprise two main wheels (3) and two secondary wheels (5) and the second sub-assembly (S2) comprise said pole (7),
- the two sub-assemblies (S1) and (S2) are rigidly connected by an assembly unit (12) starting from which an arm (15) is placed including a caster (17),
- said wheeled structure has conversion capability so that it can be handled by an operator on the two main wheels and the caster (17) in a single plane for ground running operations, on two main wheels (3) so that it can be conveyed in the style of a hand truck, pushchair, wheeled luggage item, and on the two secondary wheels (5) so that the transverse position can be adjusted when fitting panels or plates vertically,
- the pole (7) is mobile vertically relative to said main wheels (3), to the rear thereof when running on the ground, and to the fore of said main wheels when fitting the panels of plates vertically by lifting action on this first sub-assembly.

2. Wheeled structure as claimed in claim 1, **characterised in that** the first sub-assembly (S1) consists of a frame (1) made with two spaced apart and parallel tubular spars, the upper end (1a) of which is shaped and connected up to form a handle that can be gripped by the operator, **and in that** the lower end (1b) of said spars is rigidly connected to an axle (2) the ends of which bear the main wheels (3) of the wheeled structure (SR), **and in that** said first sub-assembly includes in the front part thereof an added section (4) welded to the axle (2) to form a support platform for the plate or panel, **and in that** said first sub-assembly (S1) includes at the front a couple of secondary wheels (5) which are placed crosswise relative to the direction of movement of the wheeled structure.

3. Wheeled structure as claimed in claim 2, **characterised in that** the secondary wheels (5), smaller in diameter than the main wheels, are mounted to the front of the wheeled structure, starting from shaped spars (6) secured to the axle (2), **and in that** the couple of secondary wheels is located in a plane substantially above the main wheel ground support and running plane.

4. Wheeled structure as claimed in claim 1, **characterised in that** the second sub-assembly (S2) includes a pole (7) of great height, hollow internally in order to accommodate a set of telescopic columns (8) which are capable of being deployed relative to one another by means of a mechanism with a chain system winch (9), with one or more strands, the winch (9) is itself activated by a power-driven means (10) which may be a portable electric tool, the upper column accommodating the device supporting the panel carrier or plate carrier frame.

5. Wheeled structure as claimed in claim 1, **characterised in that** the two sub-assemblies (S1-S2) are connected to one another by a unit forming a stirrup (12), **and in that** the stirrup is arranged to enable the sub-assembly (S1) to articulate relative to the sub-assembly (S2) by means of a pivot pin (13) passing through the stirrup, **and in that** the pivot pin (13) is provided and placed in the angled part of the frame (1) between the tubular spars and the grip handle-forming upper end thereof, **and in that** said stirrup is secured in position using anchoring and locking means (14) enabling a secure assembly relative to the pole (7), **and in that** the means (14) provide fixed height positioning of the sub-assembly (S1) relative to the sub-assembly (S2).

6. Wheeled structure as claimed in claim 1, **characterised in that** the unit in the form of a stirrup (12) has spaced apart and parallel flanges (12a) which are provided with oblong apertures (12b), **and in that** the pole (7) is arranged externally between said flanges with a clevis form (7a) which enables an arm (15) to be positioned by means of a hinge pin, said arm having at the end a caster (17), **and in that** the arm (15) has lugs (15a) able to slide in the apertures formed on the aforementioned flanges.
